# EUROPEAN PATENT SPECIFICATION

(11) **EP 4 009 772 B1**
(45) Date of publication and mention of the grant of the patent: **02.10.2024**
(21) Application number: 20744219.5
(22) Date of filing: 03.08.2020
(51) Int. Cl.: A01G 9/24, A01G 25/09, F16L 3/01

(54) **RECIRCULATION WHEEL FOR IRRIGATION SYSTEMS**
UMLAUFRAD FÜR BEWÄSSERUNGSSYSTEME
ROUE DE RECIRCULATION POUR SYSTÈMES D'IRRIGATION

(30) Priority: 05.08.2019 IT 201900013977
(43) Date of publication of application: 15.06.2022
(73) Proprietor: Urbinati S.r.l., 47030 San Mauro Pascoli (FC) (IT)
(72) Inventor: URBINATI, Nino, 47922 Rimini (IT)
(74) Representative: Puggioli, Tommaso
(86) International application number: PCT/IB2020/057313
(87) International publication number: WO 2021/024154

(56) References cited:
- KR-A- 20170 030 765
- KR-Y1- 200 444 297
- KR-Y1- 200 444 297
- KR-Y1- 200 444 297
- US-A- 5 344 084

## Description

### Technical field

This invention relates to an irrigation system for large greenhouses.

The expression "large greenhouses" is used to mean all those greenhouses ideal for the cultivation of large volumes of agricultural products, in particular for ordinary crops. For example, the expression "large greenhouses" is used to mean a single span or double span greenhouse without the use of partition walls or series of greenhouses (that is, multiple). In other words, the expression "large greenhouses" means any type of construction of a greenhouse suitable for achieving a predetermined cultivation environment suitable for the cultivation of large volumes of plants, preferably kitchen garden plants.

### Background art

Currently, there are prior art greenhouses equipped with irrigation systems suitable for sliding, at a predetermined height, along the length of the span. In particular, the irrigation systems are equipped with an irrigation carriage suitable for sliding at a predetermined height on suitable rails extending along the length of the span. The irrigation carriage is also equipped with one or more bars equipped with nozzles for irrigating the underlying plants. For example, in the case of a greenhouse in which two lateral portions of the span are provided with plants, the irrigation carriage comprises, on opposite portions, two bars with nozzles for irrigating the two sides. The bars are connected to suitable sliding carriages and to a primary hose for feeding the irrigation fluid. Generally speaking, these systems are also equipped with a secondary hose suitable for supplying electricity to the irrigation carriage or for distributing additives to the irrigation bars.

Irrigation systems of this type are known from patent documents US 5 344 084, KR 200 444 297 and KR 2017 0030765.

One of the main problems linked to these systems is due to the fact that the primary hose and, if it is present, the secondary hose must remain taught at a height during the movement of the carriage from one end to the other of the rails. In particular, this tension is necessary to guarantee an adequate flow of irrigation fluid to the irrigation carriage as well as to prevent possible damage to the hoses following the sliding of the irrigation carriage.

The use of a half-moon is currently known, shaped in such a way as to link the hoses in order to keep them taught.

If only the primary hose is present, the half-moon is equipped with suitable pulleys designed for accommodating the primary hose to allow a suitable sliding and maintaining the tension.

If the secondary hose is present, the half-moon is sized in such a way as to also house the secondary hose simultaneously with the primary hose. This sizing generally involves an increase in the dimensions of the components thus increasing the production costs as well as the complexity of making the half-moon.

Moreover, it is known that this solution may result in the primary hose resting on the secondary hose or vice versa, for example in such a way that the sliding axes of both lie on two respective parallel planes.

Disadvantageously, since the primary and secondary hoses are generally made of polymeric material, a sliding with a high friction between the primary hose and the secondary hose is defined.

Disadvantageously, this high friction sliding may result in damage to the hoses.

Even more disadvantageously, this high friction sliding may cause jerking of the irrigation system, in particular of the carriage or irrigation bars, such as to cause a non-optimum irrigation. In particular, due to these jerks, the irrigation of water is not uniform on all the plants therefore resulting in a difference in growth, even for plants located on the same side relative to the irrigation carriage.

### Disclosure of the invention

The technical purpose of the invention is therefore to provide an irrigation system for large greenhouses which is able to overcome the drawbacks of the prior art.

The aim of the invention is therefore to provide an irrigation system for large greenhouses which allows the primary hose and the secondary hose to be kept under tension, guaranteeing an adequate sliding of the entire irrigation system.

The technical purpose indicated and the aim specified are substantially achieved by an irrigation system for large greenhouses with the technical features set out in one or more of the appended claims. The dependent claims correspond to possible embodiments of the invention.

In particular, the technical purpose and the aim specified are substantially achieved by an irrigation system for large greenhouses comprising rails prepared at a predetermined height of a greenhouse and extending from a first end to a second end along a main direction of extension of the greenhouse and an irrigation carriage slidable along the rails between the first end and the second end. The irrigation carriage comprises at least one irrigation bar equipped with suitable nozzles configured for irrigating plants positioned in a portion of the greenhouse below the irrigation bar.

The irrigation system also comprises a primary hose connected or connectable to the irrigation carriage and configured for feeding an irrigation fluid to the at least one irrigation bar and a secondary hose connected or connectable to the irrigation carriage for feeding an additive to the at least one irrigation bar or for the electricity supply of the irrigation carriage.

The irrigation system also comprises a recirculation wheel slidable along the rails for tracking the irrigation carriage and configured to keep the primary and secondary hoses taught during a sliding of the irrigation carriage between the first and second ends of the greenhouse. The recirculation wheel defines a first sliding channel and a second sliding channel configured, respectively, to receive at least partly the primary hose and the secondary hose in such a way as to keep the sliding axes of the primary and secondary hose parallel to each other and lying on a same sliding plane.

Advantageously, the first and the second sliding channel, separate from each other, make it possible to avoid damage and/or possible jerks generated by undesired rubbing between the primary and secondary hose. Further features and advantages of the invention are more apparent in the non-limiting description which follows of a non-exclusive embodiment of an irrigation system.

### Brief description of the drawings

The description is set out below with reference to the accompanying drawings which are provided solely for purposes of illustration without restricting the scope of the invention and in which:
- Figure 1A is a schematic representation of an irrigation system according to the invention;
- Figure 1B is a schematic representation of a component of the irrigation system of Figure 1A;
- Figure 2 is a schematic representation of a detail of the component of Figure 1B.

### Detailed description of preferred embodiments of the invention

With reference to the accompanying drawings, the numeral 1 denotes in its entirety an irrigation system for large greenhouses which, for simplicity of description, will hereafter be referred to as irrigation system 1.

The expression "large greenhouses" is used to mean all those greenhouses ideal for the cultivation of large volumes of agricultural products, in particular for ordinary crops. For example, the expression "large greenhouses" is used to mean a single span or double span greenhouse without the use of partition walls or series of greenhouses (that is, multiple). In other words, the expression "large greenhouses" means any type of construction of a greenhouse suitable for achieving a predetermined cultivation environment suitable for the cultivation of large volumes of plants, preferably kitchen garden plants.

In other words, the irrigation system 1 according to the invention can be used for any type of greenhouse suitable for growing large volumes of plants.

The irrigation system 1 comprises rails 2 prepared at a predetermined height of a greenhouse (not illustrated).

The expression "predetermined height" means a height of the greenhouse suitable for allowing the irrigation system 1 to suitably irrigate the plants inside the greenhouse. Preferably, the predetermined height is a height suitable for not creating interference with the ceiling of the greenhouse.

The rails 2 extend from a first end to a second end of the greenhouse, in particular along a main direction of extension of the greenhouse. The main direction of extension generally means the length of the greenhouse. In other words, the rails 2 extend in such a way as to form a movement path "D" along the entire length of the greenhouse.

Preferably, the rails 2 are positioned in a central zone of the greenhouse, for example if the greenhouse is a double or single span greenhouse. Other configurations, according to the constructional and/or dimensional requirements of the greenhouse, may be adopted. For example, it is possible to position the rails 2 in a lateral portion of the greenhouse if the land to be cultivated is present in a central portion and/or on a portion at the side opposite that in which the rails 2 are installed.

The irrigation system 1 also comprises an irrigation carriage 3 slidable along the above-mentioned rails 2 between the first and the second end.

In other words, the irrigation carriage 3 is movable along the entire length of the greenhouse.

The irrigation carriage 3 comprises at least one irrigation bar 4 equipped with suitable nozzles 5 configured for irrigating plants positioned in a portion of the greenhouse below the irrigation bar 4. In particular, the irrigation bar 4 is equipped with a supporting rod 4a designed to support a support 5a of the nozzles 5. More specifically, the supporting rod 4a is connected to the support 5a in a central portion of it in such a way as to keep the support 5a in equilibrium so that all the nozzles 5 are positioned at the same irrigation height. The support 5a extends preferably along a direction perpendicular to that of the movement path "D" defined by the rails 2.

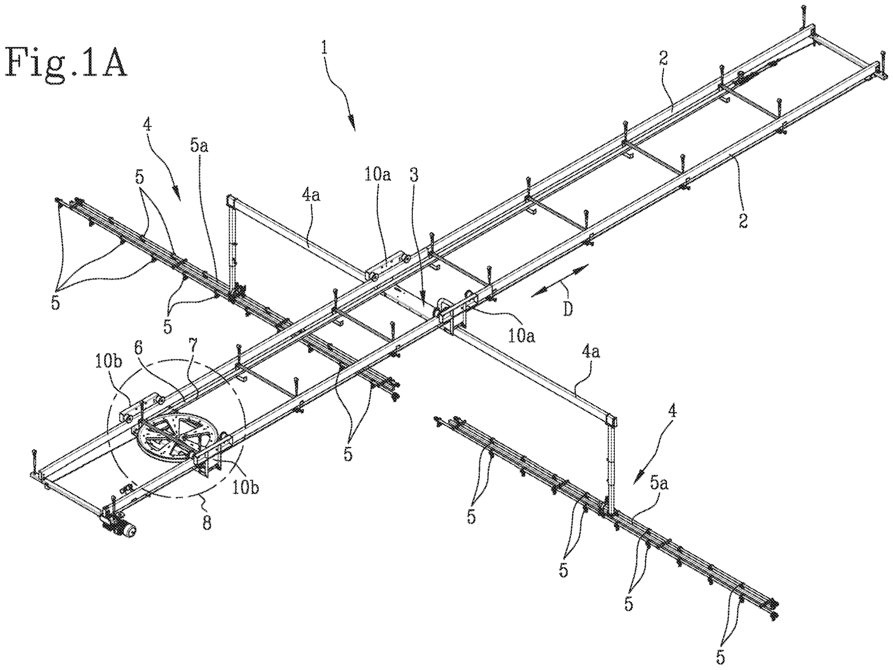

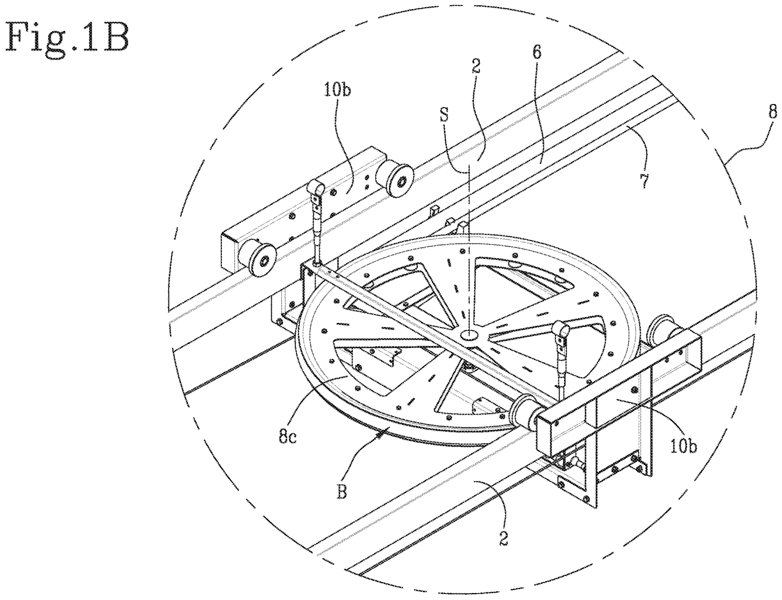

As shown in Figure 1A, the irrigation carriage 3 may comprise two irrigation bars 4 opposite each other and equipped with suitable nozzles configured for irrigating plants located in a portion below each irrigation bar 4. In particular, with reference to the movement path "D" defined by the rails 2, the irrigation bars 4 extend perpendicularly to the path. Thus, in this configuration, the support 5a and the supporting rods 4a extend along parallel directions.

This embodiment is preferably used in double span greenhouses but can be used in other configurations.

The irrigation carriage 3 also comprises, preferably, a sliding carriage 10a configured to allow the sliding of the irrigation bars 4 along the rails 2. The sliding carriage 10a may be made in one piece with the irrigation carriage 3. Alternatively, the sliding carriage 10a may be connected or connectable to the irrigation carriage 3.

The irrigation system 1 also comprises a primary hose 6 connected or connectable to the irrigation carriage 3. The term "hose" means a hose designed for transporting gas or other liquids, in this context for transporting an irrigation fluid.

The primary hose 6 is configured for feeding the irrigation fluid to the irrigation bar 4. In other words, the primary hose 6 is configured for supplying water (or other irrigation fluid) to the irrigation carriage 3 drawing it from a water source or other source. In particular, the primary hose 6 is connected to the support 5a of the nozzles 5 in such a way that they can dispense water on the plants located below them.

Preferably, as for example in the embodiment shown in the accompanying drawings, the primary hose 6 is connected or connectable to both the irrigation bars 4. In other words, the primary hose 6 is configured for feeding the irrigation fluid to both the supports 5a in such a way that the relative nozzles 5 can dispense water (or other irrigation fluid) to the underlying plants.

Preferably, the primary hose 6 has a diameter "D1" of 40 mm. Other dimensions of the diameter "D1" of the primary hose 6 are possible. The term diameter "D1" is used to mean the external diameter of the primary hose 6.

Preferably, the primary hose 6 has a circular crown cross section having a thickness "s1" of 3.5 mm. Other dimensions of the thickness "s1" are possible.

The irrigation system 1 also comprises a secondary hose 7 connected or connectable to the irrigation carriage 3.

The secondary hose 7 is configured for feeding an additive to the irrigation bar 4. The term "additive" may mean, for example, a fertiliser or other compound suitable for fertilising the ground of the greenhouse or for treating the plants.

Alternatively, the secondary hose 7 is configured for supplying electricity to the irrigation carriage 3. In other words, the secondary hose 7 defines a cover for various electrical cables suitable for electrically powering the irrigation carriage 3 and/or for sending control signals to the irrigation carriage 3 (for example, for its movement along the rails 2) or for controlling the dispensing of the nozzles 5.

Preferably, as for example in the embodiment shown in the accompanying drawings, the secondary hose 7 is connected or connectable to both the irrigation bars 4. In other words, the secondary hose 7 is configured for feeding the additive to both the supports 5a in such a way that the nozzles 5 can dispense the additive mixed with the water (or other irrigation fluid) to the underlying plants.

Preferably, the secondary hose 7 has a diameter "D2" of 20 mm. Other dimensions of the diameter "D2" of the secondary hose 7 are possible. The term diameter "D2" is used to mean the external diameter of the secondary hose 7.

Preferably, the secondary hose 7 has a circular crown cross section having a thickness "s2" of 3 mm. Other dimensions of the thickness "s2" are possible.

The irrigation system 1 also comprises a recirculation wheel 8 slidable along the rails 2 following the irrigation carriage 3. The recirculation wheel 8 is configured to keep the primary hose 6 and the secondary hose 7 taught during a sliding of the irrigation carriage 3 between the first and the second end of the greenhouse. In other words, during both a forward movement along the movement path "D" and during a return movement along the movement path "D", the recirculation wheel 8 is configured to follow a predetermined distance the irrigation carriage 3 keeping constantly under tension the primary 6 and secondary 7 hoses. The recirculation wheel 8, as shown for example in the accompanying drawings, slides on the rails 2 by means of suitable sliding carriages 10b. A suitable support for the recirculation wheel 8 is mounted on the sliding carriage 10b.

Preferably, the recirculation wheel 8 is configured to rotate about its own axis of extension "S" during the sliding along the rails 2. In other words, the recirculation wheel 8 is equipped with bearings installed or which can be installed on the support of the recirculation wheel 8 to allow the rotation during the sliding along the rails 2.

The recirculation wheel 8 defines a first sliding channel 8a and a second sliding channel 8b. The first sliding channel 8a is configured for receiving at least partly the primary hose 6. The second sliding channel 8b is configured for receiving at least partly the secondary hose 7. In other words, the first sliding channel 8a and the second sliding channel 8b are shaped in such a way as to receive and allow the sliding of the primary 6 and secondary 7 hoses in such a way as to keep them taught during a movement of the irrigation carriage 3 along the rails 2.

In particular, the first sliding channel 8a and the second sliding channel 8b accommodate, respectively, the primary hose 6 and the secondary hose 7 in such a way as to keep the sliding axes 6a and 7a of the primary hose 6 and of the secondary hose 7 parallel to each other and lying on a same sliding plane. Preferably, the sliding axes 6a and 7a of the primary hose 6 and of the secondary hose 7 are parallel to each other and lie in the same horizontal sliding plane.

Advantageously, this solution makes it possible to obtain a sliding without interference between the primary hose 6 and the secondary hose 7 which are kept in tension without the generation of jerks which could result in an oscillation of the at least one irrigation bar 4 (or irrigation bars 4) which would cause a non-optimum irrigation.

Preferably, the first sliding channel 8a and the second sliding channel 8b are spaced from each other by an axial distance "A" of 41 mm. Other dimensions of the axial distance "A" are possible.

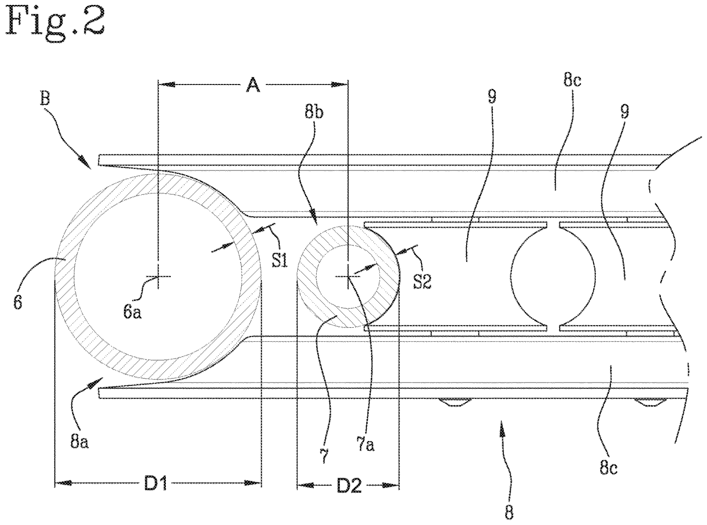

As shown for example in Figure 2, the axial distance "A" means the distance between the sliding axes 6a and 7a of the primary hose 6 and of the secondary hose 7. Preferably, the axial distance "A" may coincide with the distance of the axes of extension of the first sliding channel 8a and of the second sliding channel 8b. In other words, the axes of extension of the sliding channels 8a and 8b coincide with the respective sliding axes 6a and 7a of the primary 6 and secondary 7 hoses.

The axial distance "A" makes it possible to guarantee a detachment between the primary hose 6 and the secondary hose 7 when they slide received by the recirculation wheel 8 preventing them from sliding against each other and causing damage.

As shown in the embodiment of Figure 2, the first sliding channel 8a is be-defined directly on an annular edge portion "B" of the recirculation wheel 8, whilst the second sliding channel 8b is defined inside the recirculation wheel 8.

Preferably, the recirculation wheel 8 is defined by two annular elements 8c facing each other. Each annular element 8c has an annular edge "B" suitable for forming a portion of the first sliding channel 8a. In particular, the edge "B" of each annular element 8c has an arched profile suitable for fitting at least partly around at least one portion of the primary hose 6. For this reason, each annular element 8c has a curved shape suitable for forming the first sliding channel 8a. In other words, the first sliding channel 8a has the above-mentioned curved profile.

Preferably, the first sliding channel 8a is shaped to match at least a portion of the primary hose 6. In other words, the first sliding channel 8a has dimensions similar to those of the primary hose 6.

Preferably, the first sliding channel 8a has a diameter of 40 mm suitable for retaining a primary hose 6 with similar dimensions. Other dimensions of the diameter are possible.

The second sliding channel 8b is defined in a space defined between the two facing annular elements 8c. In other words, the second sliding channel 8b is positioned between the two annular elements 8c and is therefore positioned inside the recirculation wheel 8.

Preferably, as shown in the accompanying drawings, the second sliding channel 8b is defined by a plurality of pulleys 9 arranged radially inside the space defined by the two facing annular elements 8c. In other words, the pulleys 9 are positioned radially relative to the axis of extension "S" of the recirculation wheel 8 defining a circumference concentric to the edge "B" of the wheel 8 (that is, of the annular elements 8c). Each pulley 9 is free to rotate in such a way as to facilitate the sliding of the secondary hose 7 positioned inside the second sliding channel 8b defined by the pulleys 9.

Preferably, each pulley 9 is suitable for defining a portion of the second sliding channel 8b. Each pulley 9 has an arched profile suitable for fitting at least partly around at least one portion of the secondary hose 7. For this reason, each pulley 9 has a curved shape suitable for defining the second sliding channel 8b. In other words, the second sliding channel 8b has the above-mentioned curved profile.

Preferably, the second sliding channel 8b is shaped to match at least a portion of the secondary hose 7. In other words, the second sliding channel 8b has dimensions similar to those of the secondary hose 7.

Preferably, the second sliding channel 8b has a diameter of 20 mm suitable for retaining a secondary hose 7 with similar dimensions.

The irrigation system 1 according to the invention is able to overcome the drawbacks of the prior art.

Advantageously, the recirculation wheel 8 is shaped in such a way as to keep spaced from each other the primary 6 and secondary 7 hoses. In this way it is possible to prevent the two hoses from rubbing against each other causing jerks which would lead to unwanted movements of the irrigation bars 4.

Still more advantageously, the recirculation wheel 8 makes it possible to avoid undesired damage and wear of the two hoses.

Moreover, the recirculation wheel 8 allows the two hoses to be effectively kept taught during a sliding of the irrigation carriage 3 along the movement path "D".

## Claims

1. An irrigation system (1) for large greenhouses comprising:
- rails (2) prepared at a predetermined height of a greenhouse and extending from a first end to a second end along a main direction of extension of said greenhouse;
- an irrigation carriage (3) slidable along said rails (2) between said first end and said second end and comprising at least one irrigation bar (4) equipped with suitable nozzles (5) configured for irrigating plants located in a portion of said greenhouse below said irrigation bar (4);
- a primary hose (6) connected or connectable to said irrigation carriage (3) and configured for feeding an irrigation fluid to said at least one irrigation bar (4);
- a secondary hose (7) connected or connectable to said irrigation carriage (3) for feeding an additive to said at least one irrigation bar (4) or for electricity supply of said irrigation carriage (3);
- a recirculation wheel (8) slidable along said rails (2) following said irrigation carriage (3) and configured to keep said primary hose (6) and secondary hose (7) taut during a sliding of said irrigation carriage (3) between said first and second ends of the greenhouse and defining a first sliding channel (8a) and a second sliding channel (8b) configured, respectively, to receive at least partly said primary hose (6) and said secondary hose (7) so as to maintain sliding axes (6a, 7a) of said primary hose (6) and secondary hose (7) parallel to each other and lying on a same sliding plane, **characterised in that** said recirculation wheel (8) has said first sliding channel (8a) defined directly on an annular edge portion (B) of the same recirculation wheel (8) and wherein said second sliding channel (8b) is defined inside said recirculation wheel (8).

2. The irrigation system (1) according to claim 1, wherein said recirculation wheel (8) is defined by two annular elements (8c) facing one another, each annular element (8c) having an edge (B) suitable for defining a portion of said first sliding channel (8a) and wherein said second sliding channel (8b) is defined in a space defined between the two facing annular elements (8c).

3. The irrigation system (1) according to claim 2, wherein said second sliding channel (8b) is defined by a plurality of pulleys (9) arranged radially inside said space defined by the two facing annular elements (8c).

4. The irrigation system (1) according to any one of the preceding claims, wherein said first sliding channel (8a) and said second sliding channel (8b) have a curved profile suitable for fitting, respectively, at least partly about a portion of said primary hose (6) and said secondary hose (7).

5. The irrigation system (1) according to any one of the preceding claims, wherein said first sliding channel (8a) and said second sliding channel (8b) are shaped to match, respectively, said primary hose (6) and said secondary hose (7).

6. The irrigation system (1) according to any one of the preceding claims, wherein said primary hose (6) has a diameter (D1) of 40 mm, and wherein said secondary hose (7) has a diameter (D2) of 20 mm.

7. The irrigation system (1) according to any one of the preceding claims, wherein said first sliding channel (8a) and said second sliding channel (8b) are spaced from each other by an axial distance (A) of 41 mm.

8. The irrigation system (1) according to any one of the preceding claims, wherein said wheel (8) is configured to rotate about a relative axis of extension (S) during the sliding along said rails (2).

9. The irrigation system (1) according to any one of the preceding claims, wherein said irrigation carriage (3) comprises two irrigation bars (4) opposite each other and equipped with suitable nozzles (5) configured for irrigating plants located in a portion below each irrigation bar (4), said primary hose (6) being connected or connectable to both the irrigation bars (4), said secondary hose (7) being connected or connectable to both the irrigation bars (4).

## Patentansprüche

1. Bewässerungssystem (1) für große Gewächshäuser, umfassend:
- Schienen (2), die auf einer vorbestimmten Höhe eines Gewächshauses vorbereitet sind und sich von einem ersten Ende zu einem zweiten Ende entlang einer Hauptausdehnungsrichtung des Gewächshauses erstrecken;
- einen Bewässerungswagen (3), der entlang der Schienen (2) zwischen dem ersten und dem zweiten Ende verschiebbar ist und mindestens eine Bewässerungsstange (4) umfasst, die mit geeigneten Düsen (5) ausgestattet ist, die ausgelegt sind, um Pflanzen zu bewässern, die in einem Abschnitt des Gewächshauses unter der Bewässerungsstange (4) befindlich sind;
- einen Hauptschlauch (6), der mit dem Bewässerungswagen (3) verbunden ist oder werden kann und ausgelegt ist, um der mindestens einen Bewässerungsstange (4) ein Bewässerungsmedium zuzuführen;
- einen Nebenschlauch (7), der mit dem Bewässerungswagen (3) verbunden ist oder werden kann, um der mindestens einen Bewässerungsstange (4) einen Zusatzstoff zuzuführen oder um den Bewässerungswagen (3) mit Strom zu versorgen;
- ein Umlaufrad (8), das entlang der Schienen (2), dem Bewässerungswagen (3) folgend, verschiebbar und ausgelegt ist, um den Hauptschlauch (6) und den Nebenschlauch (7) während eines Verschiebens des Bewässerungswagens (3) zwischen dem ersten und zweiten Ende des Gewächshauses gespannt zu halten und einen ersten Verschiebekanal (8a) und einen zweiten Verschiebekanal (8b) zu definieren, die jeweils ausgelegt sind, um mindestens teilweise den Hauptschlauch (6) und den Nebenschlauch (7) aufzunehmen, sodass Verschiebeachsen (6a, 7a) des Hauptschlauchs (6) und des Nebenschlauchs (7) parallel zueinander und liegend auf einer selben Ebene beibehalten werden, **dadurch gekennzeichnet, dass** das Umlaufrad (8) einen ersten Verschiebekanal (8a) aufweist, der direkt auf einem ringförmigen Randabschnitt (B) des Umlaufrads (S) definiert ist, und wobei der zweite Verschiebekanal (8b) innerhalb des Umlaufrads (8) definiert ist.

2. Bewässerungssystem (1) nach Anspruch 1, wobei das Umlaufrad (8) durch zwei ringförmige Elemente (8c), die einander zugewandt sind, definiert ist, ein jedes ringförmiges Element (8c) einen Rand (B) aufweist, der geeignet ist, um einen Abschnitt des ersten Verschiebekanals (8a) zu definieren, und wobei der zweite Verschiebekanal (8b) in einem Raum definiert ist, der zwischen den beiden einander zugewandten Elementen (8c) definiert ist.

3. Bewässerungssystem (1) nach Anspruch 2, wobei der zweite Verschiebekanal (8b) durch eine Vielzahl von Rollen (9) definiert ist, die radial innerhalb des durch die beiden einander zugewandten ringförmigen Elemente (8c) definierten Raums angeordnet sind.

4. Bewässerungssystem (1) nach einem der vorhergehenden Ansprüche, wobei der erste Verschiebekanal (8a) und der zweite Verschiebekanal (8b) ein gekrümmtes Profil aufweisen, um jeweils mindestens um einen Abschnitt des Hauptschlauchs (6) und des Nebenschlauchs (7) eingepasst zu werden.

5. Bewässerungssystem (1) nach einem der vorhergehenden Ansprüche, wobei der erste Verschiebekanal (8a) und der zweite Verschiebekanal (8b) jeweils passend zum Hauptschlauch (6) und zum Nebenschlauch (7) ausgeformt sind.

6. Bewässerungssystem (1) nach einem der vorhergehenden Ansprüche, wobei der Hauptschlauch (6) einen Durchmesser (D1) von 40 mm aufweist, und wobei der Nebenschlauch (7) einen Durchmesser (D2) von 20 mm aufweist.

7. Bewässerungssystem (1) nach einem der vorhergehenden Ansprüche, wobei der erste Verschiebekanal (8a) und der zweite Verschiebekanal (8b) durch einen axialen Abstand (A) von 41 mm voneinander beabstandet sind.

8. Bewässerungssystem (1) nach einem der vorhergehenden Ansprüche, wobei das Rad (8) ausgelegt ist, um sich während des Verschiebens entlang der Schienen (2) um eine relative Ausdehnungsachse (S) zu drehen.

9. Bewässerungssystem (1) nach einem der vorhergehenden Ansprüche, wobei der Bewässerungswagen (3) zwei Bewässerungsstangen (4) umfasst, die gegenständig zueinander angeordnet und mit geeigneten Düsen (5) ausgestattet sind, die ausgelegt sind, um Pflanzen zu bewässern, die in einem Abschnitt unter einer jeden Bewässerungsstange (4) befindlich sind, wobei der Hauptschlauch (6) mit beiden Bewässerungsstangen (4) verbunden ist oder werden kann und der Nebenschlauch (7) mit beiden Bewässerungsstangen (4) verbunden ist oder werden kann.

## Revendications

1. Système d'irrigation (1) pour grandes serres, comprenant :
- des rails (2) préparés à une hauteur prédéterminée d'une serre et s'étendant d'une première extrémité à une seconde extrémité le long d'une direction principale d'extension de ladite serre ;
- un chariot d'irrigation (3) coulissant le long desdits rails (2) entre ladite première extrémité et ladite seconde extrémité et comprenant au moins une barre d'irrigation (4) équipée de buses appropriées (5) configurées pour irriguer les plantes situées dans une portion de ladite serre en dessous de ladite barre d'irrigation (4) ;
- un tuyau primaire (6) relié ou pouvant être relié audit chariot d'irrigation (3) et configuré pour alimenter en fluide d'irrigation ladite au moins une barre d'irrigation (4) ;
- un tuyau secondaire (7) relié ou pouvant être relié audit chariot d'irrigation (3) pour alimenter un additif vers ladite au moins une barre d'irrigation (4) ou pour l'alimentation électrique dudit chariot d'irrigation (3) ;
- une roue de recirculation (8) pouvant coulisser le long desdits rails (2) suivant ledit chariot d'irrigation (3) et configurée pour maintenir ledit tuyau primaire (6) et ledit tuyau secondaire (7) tendus pendant un coulissement dudit chariot d'irrigation (3) entre lesdites première et seconde extrémités de la serre et définissant un premier canal de coulissement (8a) et un second canal de coulissement (8b) configurés, respectivement, pour recevoir au moins partiellement ledit tuyau primaire (6) et ledit tuyau secondaire (7) de manière à maintenir les axes de coulissement (6a, 7a) dudit tuyau primaire (6) et dudit tuyau secondaire (7) parallèles l'un à l'autre et situés sur un même plan de coulissement, **caractérisée en ce que** ladite roue de recirculation (8) a ledit premier canal de coulissement (8a) défini directement sur une portion de bord annulaire (B) de la même roue de recirculation (8) et dans laquelle ledit second canal de coulissement (8b) est défini à l'intérieur de ladite roue de recirculation (8).

2. Système d'irrigation (1) selon la revendication 1, dans lequel ladite roue de recirculation (8) est définie par deux éléments annulaires (8c) se faisant face, chaque élément annulaire (8c) ayant un bord (B) approprié pour définir une portion dudit premier canal coulissant (8a) et dans lequel ledit second canal coulissant (8b) est défini dans un espace défini entre les deux éléments annulaires (8c) se faisant face.

3. Système d'irrigation (1) selon la revendication 2, dans lequel ledit second canal coulissant (8b) est défini par une pluralité de poulies (9) disposées radialement à l'intérieur dudit espace défini par les deux éléments annulaires (8c) se faisant face.

4. Système d'irrigation (1) selon l'une quelconque des revendications précédentes, dans lequel ledit premier canal coulissant (8a) et ledit second canal coulissant (8b) ont un profil incurvé approprié pour s'adapter, respectivement, au moins partiellement autour d'une portion dudit tuyau primaire (6) et dudit tuyau secondaire (7).

5. Système d'irrigation (1) selon l'une quelconque des revendications précédentes, dans lequel ledit premier canal coulissant (8a) et ledit second canal coulissant (8b) sont formés pour correspondre, respectivement, audit tuyau primaire (6) et audit tuyau secondaire (7).

6. Système d'irrigation (1) selon l'une quelconque des revendications précédentes, dans lequel ledit tuyau primaire (6) a un diamètre (D1) de 40 mm, et dans lequel ledit tuyau secondaire (7) a un diamètre (D2) de 20 mm.

7. Système d'irrigation (1) selon l'une quelconque des revendications précédentes, dans lequel ledit premier canal coulissant (8a) et ledit second canal coulissant (8b) sont espacés l'un de l'autre d'une distance axiale (A) de 41 mm.

8. Système d'irrigation (1) selon l'une quelconque des revendications précédentes, dans lequel ladite roue (8) est configurée pour tourner autour d'un axe relatif d'extension (S) pendant le coulissement le long desdits rails (2).

9. Système d'irrigation (1) selon l'une quelconque des revendications précédentes, dans lequel ledit chariot d'irrigation (3) comprend deux barres d'irrigation (4) opposées l'une à l'autre et équipées de buses appropriées (5) configurées pour irriguer les plantes situées dans une portion en dessous de chaque barre d'irrigation (4), ledit tuyau primaire (6) étant relié ou pouvant être relié aux deux barres d'irrigation (4), ledit tuyau secondaire (7) étant relié ou pouvant être relié aux deux barres d'irrigation (4).
